# EUROPÄISCHE PATENTSCHRIFT

(11) **EP 3 610 711 B1**
(45) Veröffentlichungstag und Bekanntmachung des Hinweises auf die Patenterteilung: **21.04.2021**
(21) Anmeldenummer: 18189447.8
(22) Anmeldetag: 17.08.2018
(51) Int. Cl.: A01B 39/18, A01B 41/02

(54) **DOPPELOSZILLATIONSANTRIEB, GREIFEINRICHTUNG UND LANDWIRTSCHAFTLICHE QUERHACKEINRICHTUNG**
DOUBLE OSCILLATION DRIVE, GRIPPING DEVICE AND AGRICULTURAL TRANSVERSE HACKING DEVICE
ENTRAÎNEMENT À DOUBLE OSCILLATION, DISPOSITIF DE PRÉHENSION ET DISPOSITIF DE BINAGE À TRAVERS AGRICOLE

(43) Veröffentlichungstag der Anmeldung: 19.02.2020
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A1- 1 943 895
- NL-C- 95 265

## Beschreibung

### TECHNISCHES GEBIET DER ERFINDUNG

Die Erfindung betrifft einen Doppeloszillationsantrieb, bei dem ein Antriebsmotor über eine Antriebsverbindung zwei Abtriebswellen insbesondere so antreibt, dass die Abtriebswellen entgegengesetzt zueinander orientierte Drehbewegungen ausführen und/oder die Drehbewegungen der beiden Abtriebswellen keine Phasenverschiebung aufweisen und/oder die Drehbewegungen der beiden Abtriebswellen denselben Drehwinkelverlauf aufweisen und/oder die Drehbewegungen der beiden Abtriebswellen in demselben Drehwinkelbereich oszillieren. Der Antriebsmotor wird dabei mit einem beliebigen oszillierenden Verlauf einer translatorischen Bewegung oder einer Drehbewegung betrieben.

Ein derartiger Doppeloszillationsantrieb kann verwendet werden, um von den Abtriebswellen angetriebene Bauelemente oder Werkzeuge in entgegengesetzte Richtungen einerseits in eine Schließrichtung und andererseits in eine Öffnungsrichtung hin- und hergehend zu bewegen.

Im Rahmen der vorliegenden Beschreibung und der Patentansprüche werden die folgenden exemplarischen Anwendungsmöglichkeiten eines Doppeloszillationsantriebs beschrieben:
a) Möglich ist, dass ein Doppeloszillationsantrieb Einsatz findet für eine Greifeinrichtung, bei welchem die mit den Abtriebswellen gekoppelten Werkzeuge Greifelemente sind, zwischen denen ein Gegenstand in einer Schließstellung gegriffen wird und dieser in der Öffnungsstellung freigegeben wird. Beispielsweise kann eine derartige Greifeinrichtung Einsatz finden im Zusammenhang mit dem Befüllen von Säcken, wozu die Säcke mehrere Arbeitsstationen durchlaufen müssen, nämlich eine Bereitstellungsstation mit einem leeren Sack, eine Befüllungsstation, im Bereich welcher der Sack gefüllt wird, und Transportstationen und weiteren Arbeitsstationen, in welchen der befüllte Sack transportiert und/oder gehalten werden muss. Zwischen den genannten Arbeitsstationen und/oder im Bereich der genannten Arbeitsstationen kann der Sack von der Greifeinrichtung mit intermittierender und mit dem Betrieb der Arbeitsstationen abgestimmter Taktung gehalten und/oder transportiert werden.
b) Möglich ist auch der Einsatz des Doppeloszillationsantriebs für eine landwirtschaftliche Querhackeinrichtung. Derartige Querhackeinrichtungen dienen dem Hacken von zwischen Pflanzen einer Pflanzreihe angeordnetem Wuchs, insbesondere Unkraut. In diesem Fall sind die von den Abtriebswellen des Doppeloszillationsantriebs angetriebenen Werkzeuge Hackmesser. Eine derartige landwirtschaftliche Querhackeinrichtung wird entlang der Pflanzreihe geführt. Hierbei müssen die Hackmesser während des Passierens der Pflanzen der Pflanzreihe in einer Öffnungsstellung des Doppeloszillationsantriebs so weit voneinander entfernt sein, dass die Pflanze oder ein Stängel derselben zwischen den Hackmessern beschädigungsfrei hindurchtreten kann. Ist die Pflanze passiert, müssen die Hackmesser zum Hacken des zwischen den Pflanzen angeordneten Bewuchses durch die Herbeiführung der Schließstellung des Doppeloszillationsantriebs aneinander angenähert werden oder sogar in eine überlappende Stellung gebracht werden, damit ein Hacken (worunter auch ein Schneiden zu verstehen ist) des Bewuchses durch die Hackmesser erfolgt. Wenn die landwirtschaftliche Querhackeinrichtung somit eine Pflanzreihe passiert, nehmen somit der Doppeloszillationsantrieb und die Hackmesser in hin- und hergehender Weise eine Öffnungsstellung und eine Schließstellung ein.

### STAND DER TECHNIK

EP 1 943 895 A1 betrifft ein Erntegerät, welches als handgeführter Olivenschüttler oder Kaffeeernter ausgebildet ist. Eine Antriebswelle des Erntegeräts wird von einem als Verbrennungsmotor oder Elektromotor ausgebildeten Antriebsmotor angetrieben. Ein Antriebsritzel der Antriebswelle treibt ein Kegelrad an, welches einen exzentrischen Lagerzapfen trägt, der eine Lagerachse vorgibt. An dem Lagerzapfen ist ein Pleuel gelagert, an dessen Endbereich ein Gabelkopf befestigt ist. Die rotierende Bewegung der Antriebswelle wird durch das derart gebildete Getriebe umgewandelt in eine translatorische Hin- und Herbewegung des Gabelkopfs. Der Gabelkopf treibt über eine Antriebsverbindung einen verschwenkbar gelagerten Träger eines Rechens an. Die Antriebsverbindung besteht hier aus einem Gelenkhebel, dessen einer Endbereich an dem Gabelkopf angelenkt ist, während der andere Endbereich des Gelenkhebels exzentrisch von der Schwenkachse des Trägers an dem Träger angelenkt ist.

Weiterer Stand der Technik ist aus NL 95 265 C bekannt.

### AUFGABE DER ERFINDUNG

Der Erfindung liegt die Aufgabe zugrunde, einen Doppeloszillationsantrieb vorzuschlagen, der hinsichtlich
- des konstruktiven Aufbaus,
- der Koordinierung der Bewegung der beiden Abtriebswellen,
- der Kraftentfaltung,
- des Drehwinkel- und Geschwindigkeitsverlaufes der Abtriebswellen in Abhängigkeit der Antriebsbewegung des Antriebsmotors und/oder
- der Herbeiführung großer Hackmesserkräfte insbesondere mit Annäherung an die Schließstellung
verbessert ist. Des Weiteren liegt der Erfindung die Aufgabe zugrunde, eine verbesserte Greifeinrichtung zum Greifen eines Gegenstandes sowie eine verbesserte landwirtschaftliche Querhackeinrichtung zum Hacken von zwischen Pflanzen einer Pflanzreihe angeordnetem Bewuchs vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt einen Doppeloszillationsantrieb vor, der einen hin- und hergehend betriebenen (auf einem beliebigen Antriebskonzept basierenden und eine translatorische Bewegung oder eine Drehbewegung erzeugenden) Antriebsmotor aufweist. Der Doppeloszillationsantrieb verfügt über zwei Abtriebswellen. Eine Antriebsverbindung koppelt den Antriebsmotor mit den beiden Abtriebswellen derart, dass die Abtriebswellen entgegengesetzt zueinander orientierte und hin- und hergehende Drehbewegungen ausführen.

Erfindungsgemäß ist die in dem Doppeloszillationsantrieb eingesetzte Antriebsverbindung und/oder der Antriebsmotor besonders ausgestaltet: Der Antriebsmotor oder die Antriebsverbindung treibt ein Antriebselement mit einer translatorischen Hin- und Herbewegung an. Dies kann unmittelbar durch den Antriebsmotor erfolgen, sodass der Antriebsmotor selber eine translatorische Hin- und Herbewegung herbeiführt, die dann starr mit der Bewegung des Antriebselements gekoppelt ist. Möglich ist auch, dass eine etwaige translatorische Bewegung des Antriebsmotors über ein beliebig gestaltetes Getriebe umgewandelt wird in eine translatorische Bewegung des Antriebselements, wobei dann eine Über- oder Untersetzung erfolgen kann. Schließlich ist auch möglich, dass der Antriebsmotor eine rotatorische Antriebsbewegung erzeugt, die dann über ein beliebig gestaltetes Getriebe mit Unter- oder Übersetzung umgewandelt wird in eine translatorische Hin- und Her-Bewegung des Antriebselements.

Im Bereich des Antriebselements erfolgt eine Verzweigung des Kraftflusses zu den beiden Abtriebswellen. Zu diesem Zweck ist das Antriebselement jeweils über einen Kniehebeltrieb mit einer zugeordneten Abtriebswelle gekoppelt. Hierbei kann ein Kniehebel des Kniehebeltriebs drehfest mit der Abtriebswelle und/oder dem Antriebselement verbunden sein. Möglich ist des Weiteren, dass ein Kniehebel an einer drehfest mit der Abtriebswelle verbundenen Schwinge angelenkt ist. Möglich ist aber auch, dass weitere getriebliche Verbindungen zwischen den Kniehebeltrieben und den zugeordneten Abtriebswellen angeordnet sind.

Die Kopplung des Antriebselements über die beiden Kniehebeltriebe mit dem zugeordneten Abtriebswellen gewährleistet auf einfacher Weise die gewünschte Verzweigung des Kraftflusses. Sind die Kniehebeltriebe auf gegenüberliegenden Seiten des Antriebselements angeordnet, teilt sich eine Kraft zwischen dem Antriebselement und dem Kniehebeltrieb je nach Kniewinkel des Kniehebeltriebs unter Umständen auf in eine Längskraft, welche in Richtung des translatorischen Freiheitsgrads des Antriebselements wirkt, sowie eine hierzu orientierte Querkraft. Sind die beiden Kniehebeltriebe auf gegenüberliegenden Seiten des Antriebselements angeordnet, können sich die beiden Querkräfte der beiden Kniehebeltriebe gegenseitig aufheben, womit die Beanspruchungen des Antriebselements, der Abstützung desselben und damit des Doppeloszillationsantriebs reduziert werden können.

Darüber hinaus kann erfindungsgemäß ein nicht lineares Übertragungsverhalten der Kniehebeltriebe genutzt werden. In Abhängigkeit von den Kniewinkel führt derselbe translatorische Teilhub des Antriebselements zu einer kleineren oder größeren zugeordneten Drehbewegung der Abtriebswelle, womit die von dem Antriebsmotor auf das Antriebselement applizierte Antriebskraft mit unterschiedlich großer Über- oder Untersetzung an die Abtriebswellen übertragen wird.

Um lediglich ein die Erfindung nicht beschränkendes Beispiel für die Auslegung der Kniehebeltriebe zu nennen, können sich diese mit der Annäherung an die Schließstellung einer Strecklage des Kniehebeltriebs annähern, womit an der Abtriebswelle sehr hohe Momente herbeigeführt werden können. Dies bedeutet, dass für den Einsatz des Doppeloszillationsantriebs als Greifeinrichtung mit der Annäherung an die Schließstellung große Greifkräfte mittels des Doppeloszillationsantriebs erzeugt werden können. Findet der Doppeloszillationsantrieb Einsatz für eine landwirtschaftliche Querhackeinrichtung, können mit dem Erreichen der Schließstellung, in welcher das Durchtrennen oder letzte Durchtrennen des Bewuchses erfolgt, große Hackmesserkräfte herbeigeführt werden.

Alternativ oder zusätzlich kann unter Umständen im Rahmen der Erfindung auch genutzt werden, dass der Kniehebeltrieb während der Hin- und Her-Bewegung, insbesondere mit dem Erreichen der Schließstellung, seine Strecklage einnimmt oder auch eine Betriebsstellung eng benachbart der Strecklage einnimmt. In der Strecklage kann der Kniehebeltrieb eine gewisse Sperrwirkung erzeugen, sodass eine unerwünschte Öffnungsbewegung der Abtriebswellen unter Umständen vermieden ist. Selbst wenn eine derartige Sperrwirkung nicht eintritt, kann mit einem kleinen Antriebsmoment des Antriebsmotors die Abtriebswelle in der Sperrstellung gehalten werden, beispielsweise wenn sich der Kniehebeltrieb in einem Betriebszustand eng benachbart der Strecklage befindet.

Für einen weiteren Vorschlag der Erfindung erfolgt eine Steuerung (worunter auch eine Regelung zu verstehen sein kann) des Doppeloszillationsantriebs durch eine Steuereinrichtung. Hierbei kann die Steuereinrichtung integraler oder modularer Bestandteil des Doppeloszillationsantriebs sein oder die Steuereinrichtung ist separat von dem Doppeloszillationsantrieb angeordnet, wobei in dem letztgenannten Fall ein steuerndes oder regelndes Signal einem zugeordneten Anschluss des Doppeloszillationsantriebs zugeführt wird. Die Steuerung des Doppeloszillationsantriebs durch die Steuereinrichtung erfolgt dabei derart, dass während des Betriebs des Doppeloszillationsantriebs eine Mittenstellung des Antriebselements, die vorzugsweise mittig zwischen der Öffnungsstellung und der Schließstellung liegt, eine Maximalstellung des Antriebselements, die vorzugsweise der Schließstellung des Antriebselements entspricht, eine Minimalstellung des Antriebselements, die vorzugsweise der Öffnungsstellung des Antriebselements entspricht, und/oder eine Geschwindigkeit der Bewegung des Antriebselements veränderbar ist. Dies bedeutet beispielsweise, dass für den Einsatz des Doppeloszillationsantriebs für eine landwirtschaftliche Querhackeinrichtung eine Anpassung der Öffnungs- und Schließbewegung der Querhackeinrichtung durch Veränderung der Mittenstellung, der Maximalstellung, der Minimalstellung und/oder der Geschwindigkeit der Bewegung des Antriebselements unterschiedlichen Dicken des Bewuchses, Schwankungen der lateralen Lage der Pflanzen der Pflanzreihe und/oder des Bewuchses u. ä. Rechnung getragen werden kann.

Grundsätzlich kann im Rahmen der Erfindung ein Antriebsmotor in beliebiger technischer Ausgestaltung eingesetzt werden, mit dem vorzugsweise eine translatorische oder rotatorische Antriebsbewegung erzeugt wird. Für einen Vorschlag der Erfindung weist der Doppeloszillationsantrieb einen elektrischen Antriebsmotor auf, bei welchem es sich beispielsweise um einen Schrittmotor herkömmlicher Bauart handeln kann, der eine rotatorische Bewegung oder auch eine translatorische Bewegung herbeiführt.

Insbesondere für den Fall, dass ein Antriebsmotor mit einer rotatorischen Antriebsbewegung genutzt wird, kann gemäß einem weiteren Vorschlag der Erfindung in dem Doppeloszillationsantrieb (und in der Antriebsverbindung) ein Spindeltrieb eingesetzt sein. Möglich ist hierbei, dass eine Spindel von dem Antriebsmotor angetrieben wird und axial nicht verschieblich, aber verdrehbar gelagert ist. In diesem Fall kann eine Spindelmutter axial verschieblich, aber drehfest gelagert sein. Der rotatorische Antrieb der Spindel durch den Antriebsmotor hat dann eine translatorische Verschiebung der Spindelmutter zur Folge, die (unmittelbar oder mittelbar) zum Antrieb des Antriebselements und damit der Kniehebeltriebe genutzt werden kann. Ein derartiger Spindeltrieb ermöglicht auf einfache, aber auch zuverlässige Weise und unter Umständen auch für hohe Antriebsmomente die Übertragung der verallgemeinerten Antriebskräfte und die erforderliche Umwandlung. Unter Umständen kann auch eine Selbsthemmung des Spindeltriebs genutzt werden, um eine Sicherung einer einmal herbeigeführten Position des Antriebselements bei einer Reduzierung oder einem Entfall der elektrischen Beaufschlagung eines elektrischen Antriebsmotors genutzt werden.

Problematisch bei einem Doppeloszillationsantrieb der hier vorliegenden Art kann unter Umständen sein, dass für einen beispielsweise als elektrischer Schrittmotor ausgebildeten Antriebsmotor, insbesondere nach einem Abschalten der elektrischen Leistungsversorgung, eine Referenzierung des Antriebsmotors erforderlich ist, damit eine Steuereinrichtung für den Antriebsmotor bei einer Wiederaufnahme der elektrischen Leistungsversorgung (beispielsweise einer Inbetriebnahme des Doppeloszillationsantriebs) eine Information darüber hat, welche Betriebsstellung der Antriebsmotor aktuell einnimmt. Entsprechend kann unter Umständen auch eine Referenzierung eines Sensors erforderlich sein, welcher die Bewegung eines der in dem Doppeloszillationsantrieb über dem Arbeitshub bewegten Bauelemente (insbesondere hinsichtlich des Wegs, der Geschwindigkeit oder der Beschleunigung in einem Wegbereich oder Winkelbereich) erfasst. Bspw. für diese Fälle schlägt die Erfindung vor, dass in dem Doppeloszillationsantrieb ein Anschlag vorhanden ist. Der Anschlag gibt einer Anschlagstellung des Doppeloszillationsantriebs, also eine definierte Position des Doppeloszillationsantriebs im Bereich des Hubs desselben, vor. In dem Doppeloszillationsantrieb wird zur Ermöglichung einer Referenzierung des Antriebsmotors und/oder des Sensors eine spezifische, vorbekannte Lage angesteuert, in dem die Steuereinrichtung den Doppeloszillationsantrieb in die Anschlagstellung steuert. Wird das Erreichen der Anschlagstellung erkannt (was beispielsweise durch einen Kontaktsensor des Anschlags erfolgen kann oder einen Leistungsanstieg der Bestromung des elektrischen Antriebsmotors in Folge der Anpressung an den Anschlag), erkennt die Steuereinheit, dass die Referenzlage herbeigeführt ist, sodass eine Zuordnung der zuvor abgespeicherten Referenzlage entsprechend der Position des Anschlags erfolgen kann, wodurch die Referenzierung des Antriebsmotors und/oder eines Sensors möglich ist. Wird dann ausgehend von dieser Referenzierung der Doppeloszillationsantrieb betätigt, kann ausgehend von der Anschlag- oder Referenzstellung dann das Signal des Sensors ermittelt werden oder auch bspw. die Zählung der Schritte des Schrittmotors erfolgen.

Wird für die Verwendung eines Anschlags zur Referenzierung ein Bauelement in der Anschlagstellung an den Anschlag angepresst, ist u. U. nach dem Durchführen der Referenzierung und der Wiederaufnahme des Betriebs des Doppeloszillationsantriebs ein "Losbrechen" des Bauelements von dem Anschlag und eine Überwindung einer Haftreibkraft erforderlich, was zu einer erhöhten Leistungsaufnahme des Antriebsmotors und instabilen Bewegungsvorgängen führen kann und im schlimmsten Fall zu einem "Festfressen" führen kann. Erfindungsgemäß wird vorgeschlagen, dass für eine Ausführungsform die Anschlagstellung durch eine Abstützung einer Stirnseite einer Spindel des Spindeltriebs über eine Kugel mit einer Kontaktfläche einer Spindelmutter bereitgestellt ist. Hier liegt die Stirnseite der Spindel an der Kugel und/oder die Kugel an der Kontaktfläche der Spindelmutter mit einer punktförmigen oder sehr kleinen Kontaktfläche an, wobei durch Einsatz der Kugel die Losbrechkräfte und damit die erforderliche Leistungsaufnahme des Antriebsmotors reduziert werden kann.

Die Erfindung schlägt auch vor, dass in dem Doppeloszillationsantrieb ein Sensor vorhanden ist, welcher die Bewegung (eines beliebigen, über den Hub des Doppeloszillationsantriebs bewegten Bauelements) erfasst.

Vorzugsweise erfasst dabei der Sensor die translatorische Bewegung des Antriebselements.

Für den Sensor kann ein Sensor mit einem beliebigen Messprinzip Einsatz finden. Insbesondere für den Fall, dass der Sensor die translatorische Bewegung des Antriebselements erfasst, kann der Sensor als Hall-Sensor ausgebildet sein. Möglich ist hierbei beispielsweise, dass das Antriebselement einen Magneten des Hall-Sensors trägt, sodass dieser Magnet mit dem Antriebselement translatorisch bewegt wird. An der Außenseite eines Gehäuses des Doppeloszillationsantriebs, welches dann beispielsweise aus Aluminium oder Edelstahl hergestellt ist und welches von dem magnetischen Feld des Magneten des Hall-Sensors durchdrungen wird, kann dann eine Empfangs- und Auswerteeinrichtung des Hall-Sensors angeordnet, angeflanscht oder angebracht sein.

Für eine weitere Lösung der der Erfindung zugrunde liegenden Aufgabe findet ein Doppeloszillationsantrieb der zuvor erläuterten Art Einsatz für eine Greifeinrichtung zum Greifen eines Gegenstandes, beispielsweise von Säcken. In diesem Fall verfügt die Greifeinrichtung über zwei Greifelemente, die zwischen Öffnungsstellungen und Schließstellungen bewegbar sind. Die beiden Greifelemente werden dann von den Abtriebswellen des Doppeloszillationsantriebs angetrieben, wobei dies unmittelbar oder mittelbar erfolgen kann. Möglich ist, dass die Greifelemente als Greifarme ausgebildet sind, die drehfest mit den Abtriebswellen verbunden sind und somit zwischen der Öffnungsstellung und der Schließstellung eine Schwenkbewegung ausführen.

Für eine weitere Lösung der der Erfindung zugrunde liegenden Aufgabe findet der erläuterte Doppeloszillationsantrieb Einsatz für eine landwirtschaftliche Querhackeinrichtung zum Hacken von zwischen Pflanzen einer Pflanzreihe angeordnetem Bewuchs. In diesem Fall werden die beiden Hackmesser, die quer zu einer Pflanzreihe bewegt werden, von den Abtriebswellen des Doppeloszillationsantriebs (unmittelbar oder mittelbar) angetrieben.

In weiterer Ausgestaltung dieser Ausführungsform der Erfindung bewegt der Doppeloszillationsantrieb die Hackmesser jeweils zwischen Öffnungsstellungen und Schließstellungen. Es ist dann in der landwirtschaftlichen Querhackeinrichtung eine Steuereinrichtung vorhanden, die den Doppeloszillationsantrieb ansteuert. Die Ansteuerung erfolgt dabei derart, dass mindestens eine Öffnungsstellung (vorzugsweise beide Öffnungsstellungen), mindestens eine Schließstellung (vorzugsweise beide Schließstellungen) und/oder mindestens eine Öffnungs- und/oder Schließgeschwindigkeit (vorzugsweise beide Öffnungs- und/oder Schließgeschwindigkeiten) mindestens eines Hackmessers von mittels einer Erfassungseinrichtung erfassten Informationen hinsichtlich der Pflanzen und/oder des Bewuchses zwischen den Pflanzen abhängig ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansichten schräg von oben eine Greifeinrichtung mit einem Doppeloszillationsantrieb, wobei sich die Greifeinrichtung und der Doppeloszillationsantrieb in einer Schließstellung befinden.
- **Fig. 2**: zeigt in einer räumlichen Ansicht schräg von unten die Greifeinrichtung mit Doppeloszillationsantrieb gemäß Fig. 1, wobei sich die Greifeinrichtung und der Doppeloszillationsantrieb in der Schließstellung befinden.
- **Fig. 3**: zeigt einen Längsschnitt durch eine Greifeinrichtung und einen Doppeloszillationsantrieb gemäß Fig. 1 und 2, wobei sich die Greifeinrichtung und der Doppeloszillationsantrieb in der Schließstellung befinden.
- **Fig. 4**: zeigt einen Fig. 3 entsprechenden Längsschnitt durch die Greifeinrichtung und den Doppeloszillationsantrieb, wobei sich hier die Greifeinrichtung und der Doppeloszillationsantrieb in einer Öffnungsstellung befinden.
- **Fig. 5**: zeigt in einem Vertikalschnitt die Greifeinrichtung und den Doppeloszillationsantrieb, wobei sich hier die Greifeinrichtung und der Doppeloszillationsantrieb in der Schließstellung befinden.
- **Fig. 6**: zeigt in einer schematisierten räumlichen Darstellung eine landwirtschaftliche Querhackeinrichtung mit einem Doppeloszillationsantrieb während der Nutzung derselben zum Hacken von zwischen Pflanzen einer Pflanzreihe angeordnetem Bewuchs.

### FIGURENBESCHREIBUNG

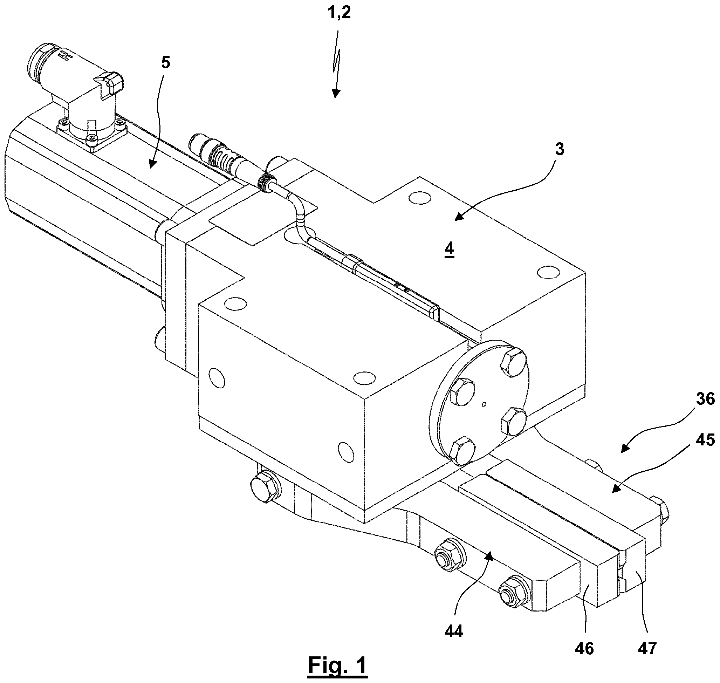

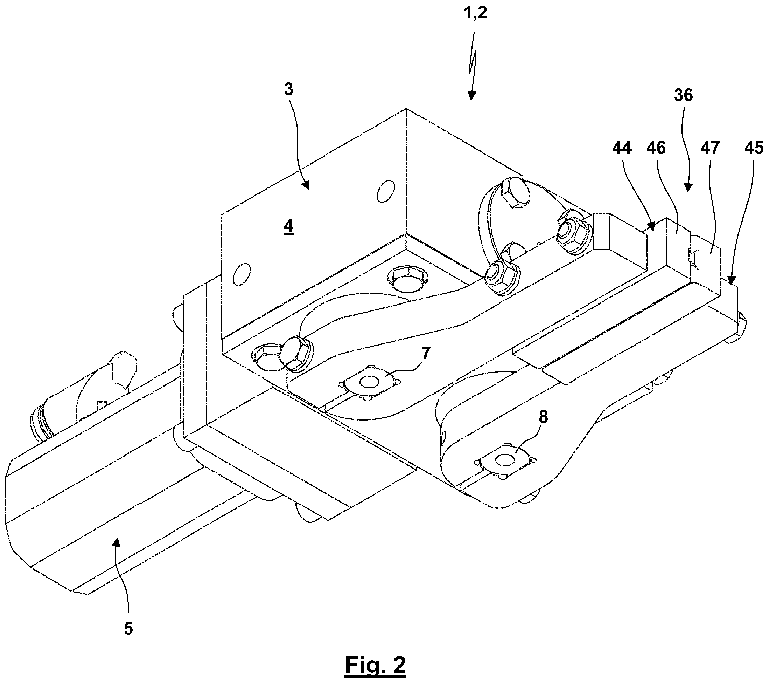

**Fig. 1 bis 5** zeigen einen Doppeloszillationsantrieb 1 bei Einsatz desselben in einer Greifeinrichtung 2.

Der Doppeloszillationsantrieb 1 verfügt über ein Getriebemodul 3 mit einem Gehäuse 4, an welches an eine hier vertikale Stirnseite ein Antriebsmotor 4 angeflanscht ist. Der Antriebsmotor 5 verfügt über eine Antriebswelle 6, die sich in das Innere des Gehäuses 4 erstreckt. Bei der in den Figuren gewählten Orientierung erstrecken sich parallel zueinander und vertikal nach unten aus dem Gehäuse 4 des Getriebemoduls 3 Abtriebswellen 7, 8 heraus.

In dem Getriebemodul 3 erfolgt eine Kopplung der Antriebswelle 6 des Antriebsmotors 5 mit den Abtriebswellen 7, 8 über eine Antriebsverbindung 9. In der Antriebsverbindung 9 sind für das dargestellte Ausführungsbeispiel ein Spindeltrieb 10 und zwei Kniehebeltriebe 11, 12 im Kraftfluss hintereinander geschaltet, wobei hierbei die beiden Kniehebeltriebe 11, 12 im Kraftfluss parallel zueinander angeordnet sind.

Der Spindeltrieb 10 weist eine Spindel 13 auf. Die Spindel 13 ist über eine drehfeste Verbindung mit der Antriebswelle 6 des Antriebsmotors 5 verbunden. Für das dargestellte Ausführungsbeispiel verfügt zu diesem Zweck die Antriebswelle 6 über parallele, auf gegenüber liegenden Seiten angeordnete Abflachungen 14, 15, die formschlüssig in Umfangsrichtung möglichst spielfrei aufgenommen sind in einer stirnseitigen Ausnehmung 16 der Spindel 13, die korrespondierende Abflachungen aufweist, sodass eine möglichst spielfreie Übertragung der Drehbewegung und eines Antriebsmoments von der Antriebswelle 6 auf die Spindel 13 erfolgt. Mittels eines axialen, in beide axiale Richtungen wirkenden Lagers 17 (welches hier von zwei unmittelbar nebeneinander angeordneten Rillenkugellagern gebildet ist) ist die Spindel 13 drehbar, aber axial nicht verschiebbar gegenüber dem Gehäuse 4 des Getriebemoduls 3 gelagert. Die Spindel 13 verfügt in dem Endbereich, der auf der dem Antriebsmotor 5 abgewandten Seite von dem Lager 17 angeordnet ist, im Bereich der Mantelfläche über ein Außengewinde 18, welches mit einem Innengewinde 19 einer Spindelmutter 20 kämmt. Die Spindelmutter 20 ist, beispielsweise durch einen formschlüssigen Eingriff von Rippen der Spindelmutter 20 in entsprechend geformte Führungsnuten des Gehäuses 4, nicht gegenüber dem Gehäuse 4 verdrehbar, aber axial translatorisch verschiebbar. Die Spindelmutter 20 ist hier einstückiger Bestandteil eines Antriebselements 21.

Das Antriebselement 21 ist translatorisch in dem Gehäuse 4 des Getriebemoduls 3 geführt, was hier mittels Gleitlagern 22, 23 erfolgt. Im Bereich der Gleitlager 22, 23 sind auch Dichtungen 24, 25, insbesondere O-Ringe, angeordnet. Der translatorische Freiheitsgrad des Antriebselements 21 ist hierbei vertikal zu der Längs- und Rotationsachse der Abtriebswellen 7, 8 orientiert.

In das Innere des Gehäuses 4 des Getriebemoduls 3 hineinragende Endbereiche der Abtriebswellen 7, 8 sind jeweils drehfest mit einer Schwinge 26, 27 verbunden. Starre Fortsätze des Antriebselements 21, die auf gegenüberliegenden Seiten des Antriebselements 21 angeordnet sind und sich in den Figuren in der Horizontalebene und quer zum translatorischen Freiheitsgrad des Antriebselements 21 sowie auch vertikal zu der Längs- und Rotationsachse der Abtriebswellen 7, 8 erstrecken, bilden jeweils einen Kniehebel 28, 29 der Kniehebeltriebe 11, 12. Diese Kniehebel 28, 29 werden nur entsprechend dem translatorischen Freiheitsgrad des Antriebselements 21 bewegt, während sich ein Winkel derselben über den Hub des Antriebselements 21 nicht ändert. In einem Kniegelenk 30, 31 sind die Kniehebel 28, 29 jeweils mit einem zugeordneten Kniehebel 32, 33 verschwenkbar verbunden. Hierbei erfolgt die Verschwenkung der Kniehebel 32, 33 in Abhängigkeit von der Bewegung des Antriebselements 21 in der in den Figuren dargestellten Orientierung des Doppeloszillationsantriebs 1 in einer Horizontalebene, bei der es sich um eine Ebene handelt, die vertikal zu den Längs- und Rotationsachsen der Abtriebswellen 7, 8 orientiert ist. Die den Kniegelenken 30, 31 abgewandten Endbereiche der Kniehebel 32, 33 sind mittels Schwenklagern 34, 35 jeweils an einer zugeordneten Schwinge 26, 27 angelenkt.

Für das dargestellte Ausführungsbeispiel sind die Kniegelenke 30, 31 sowie die Schwenklager 34, 35 mit in den entsprechenden Lageraugen der zugeordneten Bauelemente aufgenommenen Schwenkbolzen gebildet.

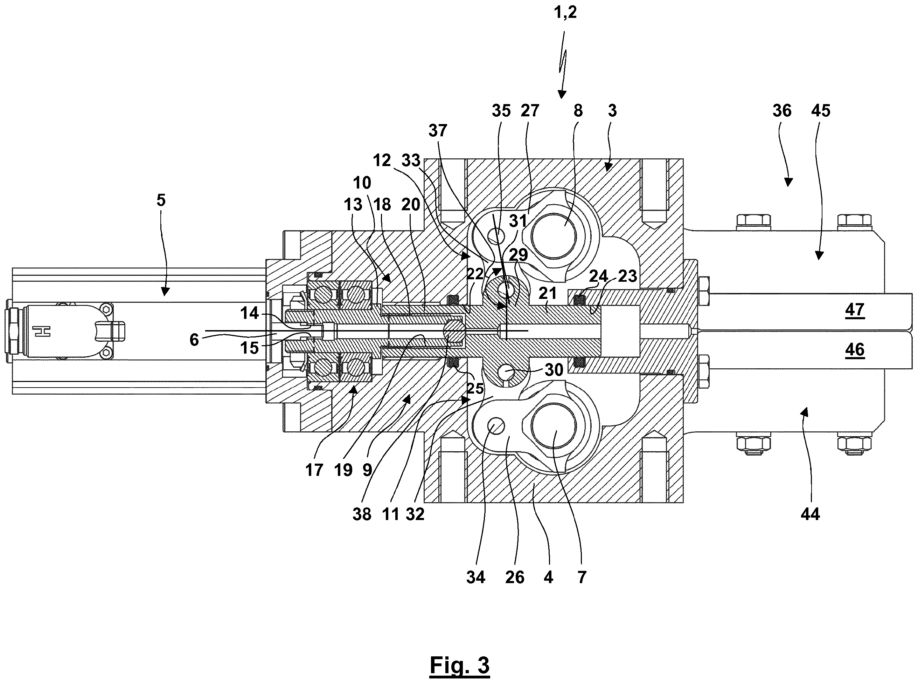

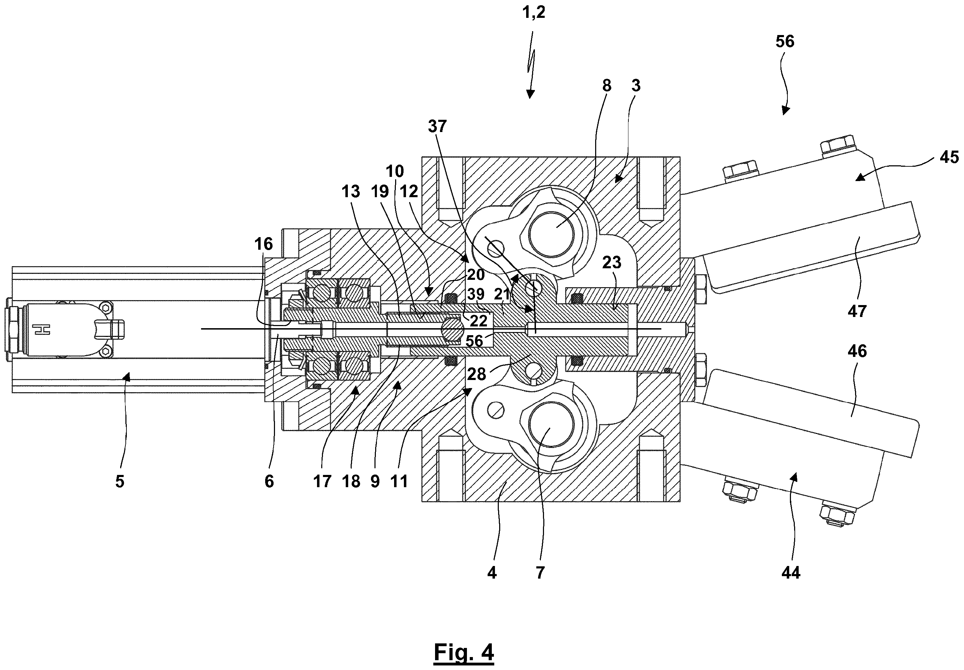

Fig. 3 zeigt den Doppeloszillationsantrieb 1 in einer Schließstellung 36. In dieser Schließstellung 36 liegt ein Kniewinkel 37 der Längsachsen der Paare der Kniehebel 29, 33 bzw. 28, 32 der Kniehebeltriebe 11, 12 im Bereich von 160° bis 180° (insbesondere 165° bis 175°), sodass die Kniehebeltriebe 11, 12 eine Betriebsstellung einnehmen, die geringfügig benachbart der Strecklage ist, welche einem Kniewinkel 37 von 180° entspricht. Von der Schließstellung 36 gemäß Fig. 3 erfolgt mit einer Öffnungsbewegung, die durch den Antrieb des Antriebmotors 5 verursacht wird, die Bewegung des Antriebselements 21 in Richtung des translatorischen Freiheitsgrades in Fig. 3 nach rechts, bis eine Öffnungsstellung 56 gemäß Fig. 4 eingenommen ist. Während dieser Bewegung verringert sich der Kniewinkel 37, wobei dieser in der Öffnungsstellung 56 gemäß Fig. 4 beispielsweise im Bereich von 30° bis 70°, insbesondere im Bereich von 40° bis 50°, liegen kann, um lediglich ein die Erfindung nicht beschränkendes Beispiel zu nennen. Mit der Veränderung des Kniewinkels 37 erfolgt eine Verschwenkung der zugeordneten Schwingen 26, 27, womit eine entsprechende Verschwenkung der Abtriebswellen 7, 8 erfolgt. Hierbei ist die Verschwenkung der Schwingen 26, 27 sowie der Abtriebswellen 7, 8 entgegengesetzt zueinander orientiert.

Als eine optionale Besonderheit trägt die Spindel 13 des Spindeltriebs 10 in dem in das Antriebselement 21 hineinragenden Endbereich eine Kugel 38, die aus der Spindel 13 mit einer teilkugelförmigen Teilmantelfläche heraussteht. In der Schließstellung 36 gemäß Fig. 3 liegt die Kugel 38 an dem Boden der Ausnehmung 39 bzw. Innengewindebohrung des Antriebselements 21 an. Dies kann durch einen Punktkontakt, einen Kontakt mit sehr kleiner Fläche oder, für den Fall, dass wie in Fig. 4 dargestellt, das Antriebselement 21 eine zentrische Bohrung aufweist, im Bereich einer schmalen Ringfläche erfolgen. Die durch den Kontakt der Kugel 28 mit dem Boden der Ausnehmung 39 wirkende kleine Kontaktfläche hat zur Folge, dass keine großen Reibmomente in der Schließstellung 36 zwischen der Spindel 13 und dem Antriebselement 21 auftreten, sodass für die Bewegung aus der Schließstellung 36 in die Öffnungsstellung 56 gemäß Fig. 4 keine großen Losbrechkräfte von dem Antriebsmotor 5 aufzubringen sind. Der Boden der Ausnehmung 39 bildet für die Kugel 38 einen Anschlag 55, der eine Anschlagstellung des Doppeloszillationsantriebs 1 vorgibt, in der eine Referenzierung des Doppeloszillationsantriebs 1 und/oder des Sensors 40 erfolgen kann.

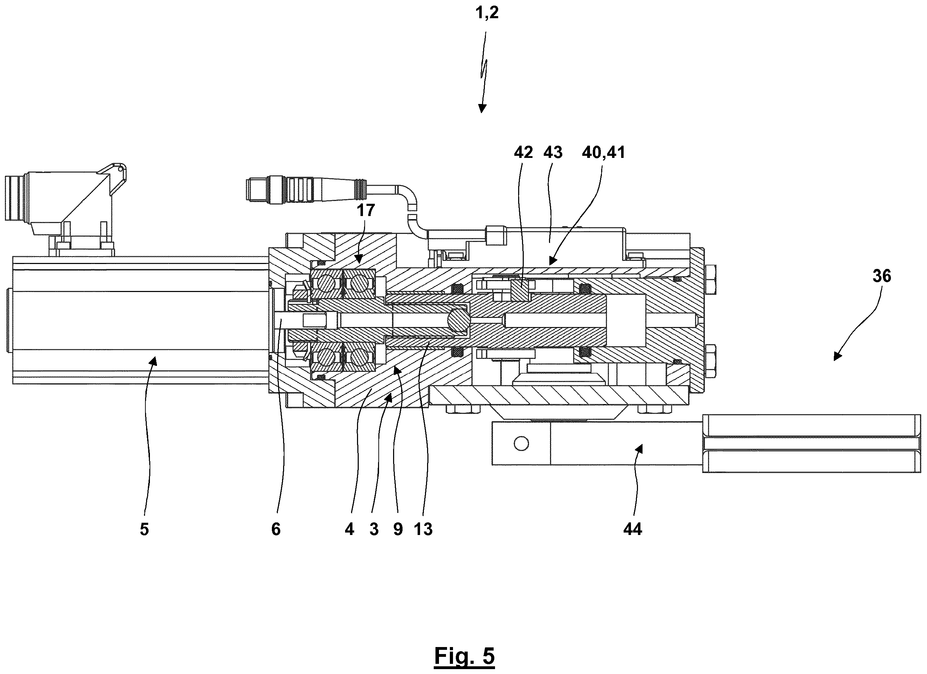

Als weitere optionale Besonderheit verfügt der Doppeloszillationsantrieb 1 über einen Sensor 40, der hier beispielhaft als Hall-Sensor 41 ausgebildet ist (s. Fig. 5). Der Sensor 40 erfasst eine Bewegung eines über den Hub des Doppeloszillationsantriebs 1 bewegten Bauelements, bei welchem es sich für das dargestellte Ausführungsbeispiel um das Antriebselement 21 handelt. Zu diesem Zweck trägt das Antriebselement 21 einen Permanentmagneten 42. Das Magnetfeld des Permanentmagneten 42 durchdringt radial außenliegend hiervon das Gehäuse 4, welches zu diesem Zweck aus Aluminium oder Edelstahl hergestellt sein kann. Eine von außen an das Gehäuse 4 angesetztes Empfangs- und/oder Verarbeitungsmodul 43 empfängt das Magnetfeld und wertet das sich ändernde Magnetfeld mit der Bewegung des Antriebselements 21 zwecks Erfassung der Hubbewegung des Antriebselements 21 aus.

Bei Einsatz des Doppeloszillationsantriebs 1 gemäß Fig. 1 bis 5 für eine Greifeinrichtung 2 sind die aus den Gehäuse 4 herausragenden Endbereiche der Abtriebswellen 7, 8 jeweils über eine geeignete Welle-Nabe-Verbindung mit Greifelementen 44, 45 (hier Greifarmen) drehfest verbunden, sodass die Greifelemente 44, 45 mit den Abtriebswellen 7, 8 mittels des Antriebsmotors 5 zwischen der Öffnungsstellung 56 und der Schließstellung 36 verschwenkt werden können. In den außenliegenden Endbereichen tragen die Greifelemente 44, 45 jeweils ein zugeordnetes, mit einer geeigneten Elastizität und Reibung sowie Konturgebung zum Greifen ausgestattete Spann- oder Greiffutter 46, 47. Mittels des Antriebsmotors 5 kann über den Spindeltrieb 10 und die Kniehebeltriebe 11 sowie die Schwingen 26, 27 eine Spann- oder Greifkraft erzeugt werden, mittels welcher mit einer Schließbewegung die Greiffutter 46, 47 von außen an einen zu greifenden Gegenstand angelegt werden können, sodass der Gegenstand von den Greiffuttern 46, 47 und den Greifelementen 44, 45 gegriffen und gehalten werden kann.

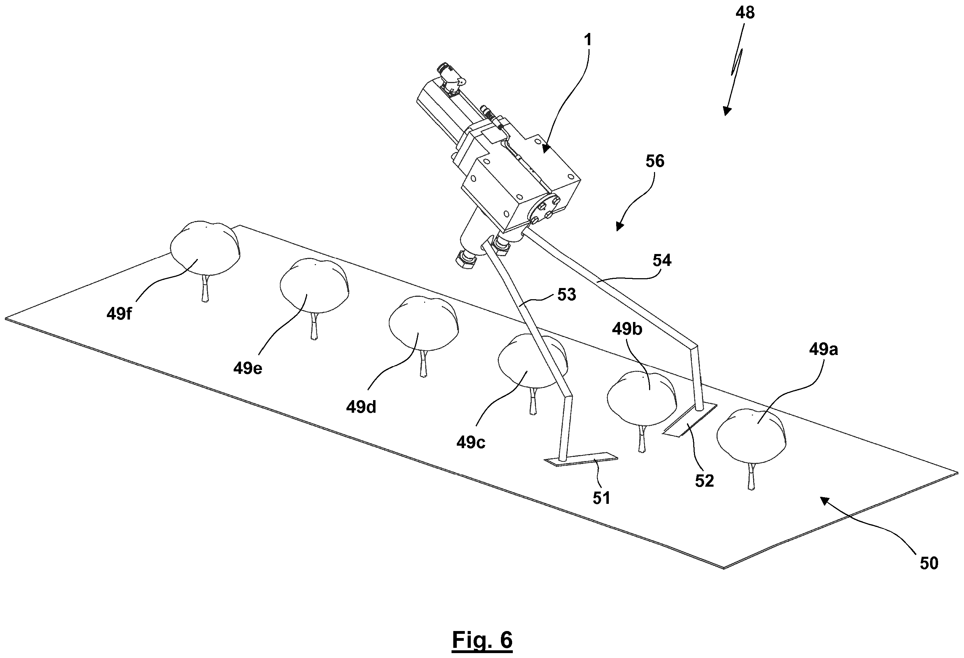

Fig. 6 zeigt die Nutzung des Doppeloszillationsantriebs 1 für eine landwirtschaftliche Querhackeinrichtung 48. Diese wird verwendet, um in Fig. 6 nicht dargestellten Bewuchs zwischen Pflanzen 49a, 49b, ... einer Pflanzreihe 50 zu hacken. Zu diesem Zweck wird die Querhackeinrichtung 48 entlang der Pflanzreihe 50 bewegt. Damit die Hackmesser 51, 52 ohne Beschädigung der Pflanzen 49a, 49b, ... diese passieren können, werden die Hackmesser 51, 52 bei dem Passieren einer Pflanze 49b (wie in Fig. 6 dargestellt) quer zu der Pflanzreihe 50 so weit auseinander bewegt in Öffnungsstellungen 56, dass die Pflanze 49b zwischen den Hackmessern 51, 52 hindurchtreten kann. Nach dem Passieren der Pflanze 49b werden die Hackmesser 51, 52 dann mittels des Doppeloszillationsantriebs 1 in eine Schließstellung 36 überführt, in welcher diese unter Umständen sogar überlappen und den Bewuchs zwischen den Pflanzen 49a, 49b, ... der Pflanzreihe 50 hacken, worunter auch ein Beschneiden verstanden wird. Für den Fall des Einsatzes des Doppeloszillationsantriebs 1 für eine Querhackeinrichtung 48 tragen die Abtriebswellen 7, 8 Hackmesserarme 53, 54, die mit den Abtriebswellen 7, 8 zwischen der Öffnungsstellung 56 und der Schließstellung 36 verschwenkt werden. Die Hackmesserarme 53, 54 tragen in den den Abtriebswellen 7, 8 abgewandten Endbereichen die Hackmesser 51, 52.

Möglich ist, dass eine Erfassungseinrichtung vorhanden ist, bei der es sich um einen beliebigen Sensor oder eine Kamera handeln kann. Mittels der Erfassungseinrichtung werden die Positionen der Pflanzen 49a, 49b,... erfasst. Mittels einer Steuereinrichtung kann dann entsprechend den erfassten Positionen der Pflanzen 49a, 49b,... eine Steuerung der Öffnungs- und Schließbewegung des Doppeloszillationsantriebs 1 derart erfolgen, dass die Hackmesser 51, 52 die Pflanzen 49a, 49b, ... ohne Beschädigungen passieren, aber den Bewuchs zwischen diesen hacken.

Für den Fall, dass der Doppeloszillationsantrieb 1 Einsatz findet für eine Greifeinrichtung 2 kann der Doppeloszillationsantrieb 1 eine Schließstellung einnehmen, welche bei einer vorgegebenen Belastung, die beispielsweise der maximalen Gewichtskraft eines mit der Greifeinrichtung 2 gehaltenen Sacks entspricht, auch ohne Bestromung des Antriebsmotors aufrecht erhalten bleibt. Dies kann bspw. alternativ oder kumulativ durch folgende Maßnahmen gewährleistet werden:
a) Möglich ist, dass sich die Kniehebeltriebe 11, 12 in der Schließstellung der Greifeinrichtung 2 in ihrer Strecklage befinden, womit diese eine Öffnungsbewegung sperren können.
b) Möglich ist, dass eine Sicherung der Schließstellung über eine Selbsthemmung des Spindeltriebs 10 erfolgt. Für einen besonderen Vorschlag der Erfindung ist hierbei möglich, dass sich die Kniehebeltriebe 11, 12 in der Umgebung der Strecklage (beispielsweise im Bereich eines Kniewinkels von 160° bis 180° oder 165° bis 179°) befinden, womit eine Öffnungskraft der Greifeinrichtung 2 bereits so weit reduziert wird, dass diese kleiner ist als die durch den Spindeltrieb 10 erzeugte Selbsthemmungskraft.
c) Auch möglich ist, dass eine Rast-oder Verriegelungseinrichtung in der Greifeinrichtung 2 eingesetzt ist, welche die Schließstellung sichert.

### BEZUGSZEICHENLISTE

- 1: Doppeloszillationsantrieb
- 2: Greifeinrichtung
- 3: Getriebemodul
- 4: Gehäuse
- 5: Antriebsmotor
- 6: Antriebswelle
- 7: Abtriebswelle
- 8: Abtriebswelle
- 9: Antriebsverbindung
- 10: Spindeltrieb
- 11: Kniehebeltrieb
- 12: Kniehebeltrieb
- 13: Spindel
- 14: Abflachung
- 15: Abflachung
- 16: Ausnehmung Spindel
- 17: Axiales Lager
- 18: Außengewinde
- 19: Innengewinde
- 20: Spindelmutter
- 21: Antriebselement
- 22: Gleitlager
- 23: Gleitlager
- 24: Dichtung
- 25: Dichtung
- 26: Schwinge
- 27: Schwinge
- 28: Kniehebel
- 29: Kniehebel
- 30: Kniegelenk
- 31: Kniegelenk
- 32: Kniehebel
- 33: Kniehebel
- 34: Schwenklager
- 35: Schwenklager
- 36: Schließstellung
- 37: Kniewinkel
- 38: Kugel
- 39: Ausnehmung
- 40: Sensor
- 41: Hall-Sensor
- 42: Permanentmagnet
- 43: Empfangs- und/oder Verarbeitungsmodul
- 44: Greifelement
- 45: Greifelement
- 46: Greiffutter
- 47: Greiffutter
- 48: Querhackeinrichtung
- 49: Pflanze
- 50: Pflanzreihe
- 51: Hackmesser
- 52: Hackmesser
- 53: Hackmesserarm
- 54: Hackmesserarm
- 55: Anschlag
- 56: Öffnungsstellung

## Patentansprüche

1. Doppeloszillationsantrieb (1) mit
a) einem hin- und hergehend betriebenen Antriebsmotor (5),
b) zwei Abtriebswellen (7, 8) und
c) einer Antriebsverbindung (9), die den Antriebsmotor (5) mit den beiden Abtriebswellen (7, 8) derart koppelt, dass die Abtriebswellen (7, 8) entgegengesetzt zueinander orientierte und hin- und hergehende Drehbewegungen ausführen,
d) wobei die Antriebsverbindung (9) oder der Antriebsmotor (5) so ausgestaltet ist, dass ein Antriebselement (21) mit einer translatorischen Hin- und Herbewegung angetrieben wird, und das Antriebselement (21) jeweils über einen Kniehebeltrieb (11, 12) mit einer zugeordneten Abtriebswelle (7, 8) gekoppelt ist.

2. Doppeloszillationsantrieb (1) nach Anspruch 1, **dadurch gekennzeichnet, dass** eine Steuereinrichtung den Doppeloszillationsantrieb (1) so steuert oder regelt, dass
a) eine Mittenstellung des Antriebselements (21) und/oder
b) eine Maximalstellung des Antriebselements (21) und/oder
c) eine Minimalstellung des Antriebselements (21) und/oder
d) eine Geschwindigkeit der Bewegung des Antriebselements (21)
während des Betriebs des Doppeloszillationsantriebs (1) veränderbar ist.

3. Doppeloszillationsantrieb (1) nach einem der vorhergehenden Ansprüche, **dadurch gekennzeichnet, dass** ein elektrischer Antriebsmotor (5) vorhanden ist.

4. Doppeloszillationsantrieb nach einem der vorhergehenden Ansprüche, **dadurch gekennzeichnet, dass** ein Spindeltrieb (10) vorhanden ist.

5. Doppeloszillationsantrieb (1) nach einem der vorhergehenden Ansprüche, **dadurch gekennzeichnet, dass** ein Anschlag (55) vorhanden ist, der eine Anschlagstellung des Doppeloszillationsantriebs (1) vorgibt, und eine oder die Steuereinrichtung Steuerlogik aufweist, die den Doppeloszillationsantrieb (1) in die Anschlagstellung steuert und in der Anschlagstellung eine Referenzierung des Antriebsmotors (5) und/oder eines Sensors (40) vornimmt.

6. Doppeloszillationsantrieb (1) nach Anspruch 5 in Rückbeziehung auf Anspruch 4, **dadurch gekennzeichnet, dass** die Anschlagstellung durch eine Abstützung einer Stirnseite einer Spindel (13) des Spindeltriebs (10) über eine Kugel (38) an einer Kontaktfläche einer Spindelmutter (20) bereitgestellt ist.

7. Doppeloszillationsantrieb (1) nach einem der vorhergehenden Ansprüche, **dadurch gekennzeichnet, dass** ein Sensor (40) vorhanden ist, welcher die Bewegung des Doppeloszillationsantriebs (1) erfasst.

8. Doppeloszillationsantrieb (1) nach Anspruch 7, **dadurch gekennzeichnet, dass** der Sensor (40) die translatorische Bewegung des Antriebselements (21) erfasst.

9. Doppeloszillationsantrieb (1) nach Anspruch 8, **dadurch gekennzeichnet, dass** der Sensor (40) ein Hall-Sensor (41) ist.

10. Greifeinrichtung (2) zum Greifen eines Gegenstandes mit
a) einem Doppeloszillationsantrieb (1) nach einem der vorhergehenden Ansprüche und
b) zwei Greifelementen (44, 45), die zwischen Öffnungsstellungen (56) und Schließstellungen (36) bewegbar sind,
c) wobei die beiden Greifelemente (44, 45) von den Abtriebswellen (7, 8) des Doppeloszillationsantriebs (1) angetrieben werden.

11. Landwirtschaftliche Querhackeinrichtung (48) zum Hacken von zwischen Pflanzen (49a, 49b, 49c, ...) einer Pflanzreihe (50) angeordnetem Bewuchs mit
a) zwei quer zu einer Pflanzreihe (50) bewegbaren Hackmessern (51, 52) und
b) einem Doppeloszillationsantrieb (1) nach einem der Ansprüche 1 bis 9,
c) wobei die beiden Hackmesser (51, 52) von den Abtriebswellen (7, 8) des Doppeloszillationsantriebs (1) angetrieben werden.

12. Landwirtschaftliche Querhackeinrichtung (48) nach Anspruch 11, **dadurch gekennzeichnet, dass**
a) der Doppeloszillationsantrieb (1) die Hackmesser (51, 52) jeweils zwischen Öffnungsstellungen (56) und Schließstellungen (36) bewegt und
b) eine Steuereinrichtung vorhanden ist, die den Doppeloszillationsantrieb (1) so ansteuert, dass
ba) mindestens eine Öffnungsstellung (56) und/oder
bb) mindestens eine Schließstellung (36) und/oder
bc) mindestens eine Öffnungs- und/oder Schließgeschwindigkeit mindestens eines Hackmessers (51, 52) von mittels einer Erfassungseinrichtung erfassten Informationen hinsichtlich der Pflanzen und/oder des Bewuchses zwischen den Pflanzen abhängig ist.

## Claims

1. Double oscillation drive (1) comprising
a) a drive motor (5) operated for oscillating,
b) two output shafts (7, 8) and
c) a driving connection (9) which couples the drive motor (5) to the two output shafts (7, 8) in a way such that the output shafts (7, 8) execute oscillating rotational movements having an orientation opposite to each other,
d) the driving connection (9) or the drive motor (5) being designed such that a driving element (21) is driven with a translational oscillating movement and the driving element (21) is coupled to each of the output shafts (7, 8) by a respective toggle lever drive (11, 12).

2. Double oscillation drive (1) of claim 1, **characterised in that** a control device controls the double oscillation drive (1) in a way such that it is possible to change
a) a middle position of the driving element (21) and/or
b) a maximum position of the driving element (21) and/or
c) a minimum position of the driving element (21) and/or
d) a velocity of the movement of the driving element (21)
during the operation of the double oscillation drive (1).

3. Double oscillation drive (1) of one of the preceding claims, **characterised in that** an electric drive motor (5) is provided.

4. Double oscillation drive (1) of one of the preceding claims, **characterised in that** a spindle drive (10) is provided.

5. Double oscillation drive (1) of one of the preceding claims, **characterised in that** a stop (55) is provided which defines a stop position of the double oscillation drive (1) and the or a control device comprises control logic which controls the double oscillation drive (1) into the stop position and which performs a referencing of the drive motor (5) and/or a sensor (40) in the stop position.

6. Double oscillation drive (1) of claim 5 when referring back to claim 4, **characterised in that** the stop position is provided by a support of a front face of a spindle (13) of the spindle drive (10) via a ball (38) on a contact surface of a spindle nut (20).

7. Double oscillation drive (1) of one of the preceding claims, **characterised in that** a sensor (40) is provided which senses the movement of the double oscillation drive (1).

8. Double oscillation drive (1) of claim 7, **characterised in that** the sensor (40) senses the translational movement of the driving element (21).

9. Double oscillation drive (1) of claim 8, **characterised in that** the sensor (40) is a Hall-sensor (41).

10. Gripping device (2) for gripping an object comprising
a) a double oscillation drive (1) of one of the preceding claims and
b) two gripping elements (44, 45) which can be moved between open positions (56) and closed positions (36),
c) the two gripping elements (44, 45) being driven by the output shafts (7, 8) of the double oscillation drive (1).

11. Agricultural transverse hacking device (48) for hacking ground covering arranged between plants (49a, 49b, 49c, ...) of a plant row (50) comprising
a) two hacking blades (51, 52) which are movable transverse to a plant row (50) and
b) a double oscillation drive (1) of one of claims 1 to 9,
c) the two hacking blades (51, 52) being driven by the output shafts (7, 8) of the double oscillation drive (1).

12. Agricultural transverse hacking device (48) of claim 11, **characterised in that**
a) the double oscillation drive (1) moves each of the hacking blades (51, 52) between an open position (56) and a closed position (36) and
b) a control device is provided which controls the double oscillation drive (1) in a way such that
ba) at least one open position (56) and/or
bb) at least one closed position (36) and/or
bc) at least one opening velocity and/or closing velocity
of at least one hacking blade (51, 52) depends on information concerning the plants and/or the ground covering between the plants captured by a capturing device.

## Revendications

1. Entraînement à double oscillation (1), avec
a) un moteur d'entraînement (5) actionné dans un mouvement de va-et-vient,
b) deux arbres de sortie (7, 8), et
c) un raccordement d'entraînement (9) qui couple le moteur d'entraînement (5) avec les deux arbres de sortie (7, 8) de telle sorte que les arbres de sortie (7, 8) exécutent des mouvements de rotation orientés à l'opposé l'un de l'autre en va-et-vient,
d) le raccordement d'entraînement (9) ou le moteur d'entraînement (5) étant constitué de sorte qu'un élément d'entraînement (21) est entraîné dans un mouvement de va-et-vient en translation, et l'élément d'entraînement (21) étant couplé à un arbre de sortie (7, 8) affecté respectivement par le biais d'un mécanisme à levier à genouillère (11, 12).

2. Entraînement à double oscillation (1) selon la revendication 1, **caractérisé en ce qu'**un équipement de commande commande ou régule l'entraînement à double oscillation (1) de sorte que
a) une position médiane de l'élément d'entraînement (21) et/ou
b) une position maximale de l'élément d'entraînement (21) et/ou
c) une position minimale de l'élément d'entraînement (21) et/ou
d) une vitesse du mouvement de l'élément d'entraînement (21)
peut être modifiée pendant le fonctionnement de l'entraînement à double oscillation (1).

3. Entraînement à double oscillation (1) selon l'une des revendications précédentes, **caractérisé par** la présence d'un moteur d'entraînement (5) électrique.

4. Entraînement à double oscillation selon l'une des revendications précédentes, **caractérisé par** la présence d'un mécanisme à broche (10).

5. Entraînement à double oscillation (1) selon l'une des revendications précédentes, **caractérisé par** la présence d'une butée (55) qui impose une position de butée de l'entraînement à double oscillation (1), et en ce qu'un ou l'équipement de commande comporte une logique de commande qui commande l'entraînement à double oscillation (1) vers la position de butée et qui, dans la position de butée, procède à un référencement du moteur d'entraînement (5) et/ou d'un capteur (40).

6. Entraînement à double oscillation (1) selon la revendication 5 en tant qu'elle est rattachée à la revendication 4, **caractérisé en ce que** la position de butée est fournie par un appui d'un côté frontal d'une broche (13) du mécanisme à broche (10) sur une surface de contact d'un écrou de broche (20) par le biais d'une bille (38).

7. Entraînement à double oscillation (1) selon l'une des revendications précédentes, **caractérisé par** la présence d'un capteur (40) qui détecte le mouvement de l'entraînement à double oscillation (1).

8. Entraînement à double oscillation (1) selon la revendication 7, **caractérisé en ce que** le capteur (40) détecte le mouvement de translation de l'élément d'entraînement (21).

9. Entraînement à double oscillation (1) selon la revendication 8, **caractérisé en ce que** le capteur (40) est un capteur à effet Hall (41).

10. Dispositif de préhension (2) destiné à la préhension d'un objet, avec
a) un entraînement à double oscillation (1) selon l'une des revendications précédentes, et
b) deux éléments de préhension (44, 45) qui sont mobiles entre des positions d'ouverture (56) et des positions de fermeture (36),
c) les deux éléments de préhension (44, 45) étant entraînés par les arbres de sortie (7, 8) de l'entraînement à double oscillation (1).

11. Dispositif de binage à travers (48) agricole destiné au binage de végétation disposée entre des plantes (49a, 49b, 49c, ...) d'un rang de plantation (50), avec
a) deux lames piocheuses (51, 52) mobiles transversalement à un rang de plantation (50), et
b) un entraînement à double oscillation (1) selon l'une des revendications 1 à 9,
c) les deux lames piocheuses (51, 52) étant entraînées par les arbres de sortie (7, 8) de l'entraînement à double oscillation (1).

12. Dispositif de binage à travers (48) agricole selon la revendication 11, **caractérisé en ce que**
a) l'entraînement à double oscillation (1) déplace les lames piocheuses (51, 52) respectivement entre des positions d'ouverture (56) et des positions de fermeture (36), et
b) **en ce qu'**il y a un équipement de commande qui pilote l'entraînement à double oscillation (1) de sorte que
ba) au moins une position d'ouverture (56), et/ou
bb) au moins une position de fermeture (36), et/ou
bc) au moins une vitesse d'ouverture et/ou de fermeture
d'au moins une lame piocheuse (51, 52) dépend d'informations, détectées au moyen d'un équipement de détection, concernant les plantes et/ou la végétation entre les plantes.
